# EUROPEAN PATENT SPECIFICATION

(11) **EP 2 586 233 B1**
(45) Date of publication and mention of the grant of the patent: **17.09.2014**
(21) Application number: 11729002.3
(22) Date of filing: 22.06.2011
(51) Int. Cl.: H04W 24/02

(54) **AUTOMATIC NEIGHBOR RELATION (ANR) FUNCTIONS FOR RELAY NODES, HOME BASE STATIONS, AND RELATED ENTITIES**
AUTOMATIC NEIGHBOR RELATION (ANR)-FUNKTIONEN FÜR RELAISKNOTEN, HEIMBASISSTATIONEN UND ZUGEHÖRIGE EINHEITEN
FONCTIONS DE RELATION DE VOISINAGE AUTOMATIQUE (ANR) POUR NOEUDS DE RELAIS, STATIONS DE BASE DOMESTIQUES ET ENTITÉS ASSOCIÉES

(30) Priority: 21.06.2011 US 201113165526; 22.06.2010 US 357472 P
(43) Date of publication of application: 01.05.2013
(73) Proprietor: Qualcomm Incorporated, San Diego, CA 92121-1714 (US)
(72) Inventor: PRAKASH, Rajat, San Diego California 92121-1714 (US); SONG, Osok, San Diego California 92121-1714 (US); HORN, Gavin Bernard, San Diego California 92121-1714 (US)
(74) Representative: Wegner, Hans
(86) International application number: PCT/US2011/041505
(87) International publication number: WO 2011/163403

(56) References cited:
- MITSUBISHI ELECTRIC: "Neighbour Discovery and Neighbour Management with Relays", 3GPP TSG RAN WG3 MEETING #68, MONTREAL, CANADA, 10 -14 MAY 2010, , vol. R3-101620, no. 68 10 May 2010 (2010-05-10), pages 1-5, XP002647086, Retrieved from the Internet: URL:http://www.3gpp.org/ftp/tsg_ran/WG3_Iu /TSGR3_68/Docs/R3-101620.zip [retrieved on 2010-05-14]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 17 June 2010 (2010-06-17), pages 1-183, XP050441905,

## Description

### BACKGROUND

### FIELD

Certain aspects of the disclosure generally relate to wireless communications and, more particularly, to implementing Automatic Neighbor Relation (ANR) functions for relay nodes, home base stations, and related entities.

### BACKGROUND

Wireless communication networks are widely deployed to provide various communication services such as voice, video, packet data, messaging, broadcast, etc. These wireless networks may be multiple-access networks capable of supporting multiple users by sharing the available network resources (e.g., bandwidth and transmit power). Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, 3^{rd} Generation Partnership Project (3GPP) Long Term Evolution (LTE) networks, and Long Term Evolution Advanced (LTE-A) networks.

A wireless communication network may include a number of base stations that can support communication with a number of user equipment devices (UEs). A UE may communicate with a base station via the downlink and uplink. The downlink (or forward link) refers to the communication link from the base station to the UE, and the uplink (or reverse link) refers to the communication link from the UE to the base station. A base station may transmit data and control information on the downlink to a UE and/or may receive data and control information on the uplink from the UE. This communication link may be established via a single-input single-output, multiple-input single-output or a multiple-input multiple-output (MIMO) system.

Wireless communication systems may comprise a donor base station that communicates with wireless terminals via a relay node, such as a relay base station. The relay node may communicate with the donor base station via a backhaul link and with the terminals via an access link. In other words, the relay node may receive downlink messages from the donor base station over the backhaul link and relay these messages to the terminals over the access link. Similarly, the relay node may receive uplink messages from the terminals over the access link and relay these messages to the donor base station over the backhaul link. The relay node may, thus, be used to supplement a coverage area and help fill "coverage holes."

In addition, a new class of small base stations for providing access to wireless communication systems has emerged, which may be installed in a user's home and provide indoor wireless coverage to mobile units using existing broadband Internet connections. Such a base station is generally known as a femtocell access point (FAP), but may also be referred to as Home Node B (HNB) unit, Home evolved Node B unit (HeNB), femto cell, femto Base Station (fBS), base station, or base station transceiver system. Typically, the femto access point is coupled to the Internet and the mobile operator's network via a Digital Subscriber Line (DSL), cable internet access, T1/T3, or the like, and offers typical base station functionality, such as Base Transceiver Station (BTS) technology, radio network controller, and gateway support node services. This allows a mobile station (MS)-also referred to as a cellular/mobile device or handset, access terminal (AT) or user equipment (UE)-to communicate with the femtocell access point and utilize the wireless service.

Technical Document 3GPP TSG, "Neighbour Discovery and Neighbour Management with Relays", R3-101620, RAN3 #68, Montreal, Canada, May 10-14, 2010 presents consequences of having the DeNB as a role of X2 proxy for Relay Nodes in neighbour discovery functions and neighbours management and proposes a solution for neighbour discovery.

### SUMMARY

The invention is defined in the independent claims. X2 is designed to be an end-to-end protocol between two evolved Node Bs (eNBs). However, for the case of relay nodes or home eNBs (HeNBs), this protocol may involve a proxy function. This creates several issues, such as how to manage a potentially very large set of cells under a gateway and how to route S1 messages that are used for X2 endpoint discovery. Therefore, certain aspects of the present disclosure generally relate to methods and apparatus for hiding the large number of nodes from the X2 endpoints and maintaining the X2 connections intelligently based on various triggers.

In an aspect of the disclosure, a method for wireless communications is provided. The method generally includes receiving, at a first base station, an Internet protocol (IP) address query from a client node, wherein the IP address query includes an identifier for a second base station; processing the IP address query at the first base station to initiate or maintain an interface between the first base station and the second base station; and transmitting a configuration update from the first base station to the client node, wherein the configuration update includes the identifier for the second base station to indicate the second base station is associated with the first base station.

In an aspect of the disclosure, a first apparatus for wireless communications is provided. The first apparatus generally includes a receiver configured to receive an IP address query from a client node, wherein the IP address query includes an identifier for a second apparatus; at least one processor configured to process the IP address query to initiate or maintain an interface between the first base station and the second apparatus; and a transmitter configured to transmit a configuration update to the client node, wherein the configuration update includes the identifier for the second apparatus to indicate the second apparatus is associated with the first apparatus.

In an aspect of the disclosure, a first apparatus for wireless communications is provided. The first apparatus generally includes means for receiving an IP address query from a client node, wherein the IP address query includes an identifier for a second apparatus; means for processing the IP address query to initiate or maintain an interface between the first apparatus and the second apparatus; and means for transmitting a configuration update from the first apparatus to the client node, wherein the configuration update includes the identifier for the second apparatus to indicate the second apparatus is associated with the first apparatus.

In an aspect of the disclosure, a computer-program product for wireless communications is provided. The computer-program product generally includes a computer-readable medium having code for receiving, at a first base station, an IP address query from a client node, wherein the IP address query includes an identifier for a second base station; for processing the IP address query at the first base station to initiate or maintain an interface between the first base station and the second base station; and for transmitting a configuration update from the first base station to the client node, wherein the configuration update includes the identifier for the second base station to indicate the second base station is associated with the first base station.

In an aspect of the disclosure, a method for wireless communications is provided. The method generally includes receiving, at a client node, an IP address query from a network node, wherein the IP address query includes an identifier for the client node; and in response to the IP address query, transmitting a message indicating an IP address of a first gateway node to enable the first gateway node to establish an interface with a base station.

In an aspect of the disclosure, an apparatus for wireless communications is provided. The apparatus generally includes a receiver configured to receive an IP address query from a network node, wherein the IP address query includes an identifier for the apparatus; and a transmitter configured to transmit a message indicating an IP address of a first gateway node in response to the IP address query to enable the first gateway node to establish an interface with a base station.

In an aspect of the disclosure, an apparatus for wireless communications is provided. The apparatus generally includes means for receiving an IP address query from a network node, wherein the IP address query includes an identifier for the apparatus; and means for transmitting a message indicating an IP address of a gateway node in response to the IP address query to enable the gateway node to establish an interface with a base station.

In an aspect of the disclosure, a computer-program product for wireless communications is provided. The computer-program product generally includes a computer-readable medium having code for receiving, at a client node, an IP address query from a network node, wherein the IP address query includes an identifier for the client node; and in response to the IP address query, for transmitting a message indicating an IP address of a gateway node to enable the gateway node to establish an interface with a base station.

In an aspect of the disclosure, a method for wireless communications is provided. The method generally includes receiving, at a network gateway node, an IP address query from a core network component, wherein the IP address query includes an identifier for a client node; forwarding the IP address query to the client node; and receiving a message indicating an IP address of the network gateway node.

In an aspect of the disclosure, an apparatus for wireless communications is provided. The apparatus generally includes a receiver configured to receive an IP address query from a core network component, wherein the IP address query includes an identifier for a client node; and a transmitter configured to forward the IP address query to the client node, wherein the receiver is configured to receive a message indicating an IP address of the apparatus.

In an aspect of the disclosure, an apparatus for wireless communications is provided. The apparatus generally includes means for receiving an IP address query from a core network component, wherein the IP address query includes an identifier for a client node; and means for forwarding the IP address query to the client node , wherein the means for receiving is configured to receive a message indicating an IP address of the apparatus.

In an aspect of the disclosure, a computer-program product for wireless communications is provided. The computer-program product generally includes a computer-readable medium having code for receiving, at a network gateway node, an IP address query from a core network component, wherein the IP address query includes an identifier for a client node; for forwarding the IP address query to the client node; and for receiving a message indicating an IP address of the network gateway node.

In an aspect of the disclosure, a method for wireless communications is provided. The method generally includes maintaining, at a base station, a first set of one or more nodes neighboring the base station; populating a second set of the neighboring nodes in response to one or more defined events associated with a particular network node, wherein the second set comprises at least a portion of the neighboring nodes in the first set; and transmitting, to the particular network node, an indication of the second set of the neighboring nodes.

In an aspect of the disclosure, an apparatus for wireless communications is provided. The apparatus generally includes at least one processor and a transmitter. The at least one processor is typically configured to maintain a first set of one or more nodes neighboring the apparatus and to populate a second set of the neighboring nodes in response to one or more defined events associated with a particular network node, wherein the second set comprises at least a portion of the neighboring nodes in the first set. The transmitter is generally configured to transmit, to the particular network node, an indication of the second set of the neighboring nodes.

In an aspect of the disclosure, an apparatus for wireless communications is provided. The apparatus generally includes means for maintaining a first set of one or more nodes neighboring the apparatus; means for populating a second set of the neighboring nodes in response to one or more defined events associated with a particular network node, wherein the second set comprises at least a portion of the neighboring nodes in the first set; and means for transmitting, to the particular network node, an indication of the second set of the neighboring nodes.

In an aspect of the disclosure, a computer-program product for wireless communications is provided. The computer-program product generally includes a computer-readable medium having code for maintaining, at a base station, a first set of one or more nodes neighboring the base station; populating a second set of the neighboring nodes in response to one or more defined events associated with a particular network node, wherein the second set comprises at least a portion of the neighboring nodes in the first set; and transmitting, to the particular network node, an indication of the second set of the neighboring nodes.

### BRIEF DESCRIPTION OF THE DRAWINGS

The features, nature, and advantages of the present disclosure will become more apparent from the detailed description set forth below when taken in conjunction with the drawings in which like reference characters identify correspondingly throughout and wherein:
FIG. 1 illustrates an example wireless communication system according to an aspect of the present disclosure.
FIG. 2 is a block diagram conceptually illustrating an example of a Node B in communication with a user equipment (UE) in a wireless communication system, according to an aspect of the present disclosure.
FIG. 3 illustrates an example wireless communications system with a relay base station according to an aspect of the present disclosure.
FIG. 4 illustrates an example communications system to enable deployment of access point base stations within a network environment, according to an aspect of the present disclosure.
FIG. 5 is a block diagram conceptually illustrating an example of a home evolved Node B (HeNB) and HeNB gateway (GW) configuration in a high rate packet data (HRPD) packet-switched communications network, according to an aspect of the present disclosure.
FIG. 6 illustrates an exemplary Evolved Universal Terrestrial Radio Access Network (E-UTRAN) architecture, according to an aspect of the present disclosure.
FIG. 7 is a call flow diagram illustrating a neighbor eNB discovering a relay via UE automatic neighbor relation (ANR), according to an aspect of the present disclosure.
FIG. 8 is a call flow diagram illustrating a relay discovering a neighbor eNB via UE ANR, according to an aspect of the present disclosure.
FIG. 9 is a call flow diagram illustrating a neighbor eNB discovering an HeNB via UE ANR, according to an aspect of the present disclosure.
FIG. 10 is a flow diagram of example operations, which may be performed by a first base station, for discovering the Internet Protocol (IP) address of a second base station that a client node has become aware of due to UE ANR, according to an aspect of the present disclosure.
FIG. 11 is a flow diagram of example operations, which may be performed by a network gateway node, for determining the IP address of the network gateway node so that this node may establish an interface with a base station that has become aware of a client node served by the network gateway node due to UE ANR, according to an aspect of the present disclosure.
FIG. 12 is a flow diagram of example operations, which may be performed by a client node, for transmitting the IP address of a network gateway node so that this node may establish an interface with a base station that has become aware of the client node due to UE ANR, according to an aspect of the present disclosure.
FIG. 13 is a call flow diagram illustrating a donor evolved Node B (DeNB) transmitting a served cell list with a new neighbor eNB to a relay node, according to an aspect of the present disclosure.
FIG. 14 is a call flow diagram illustrating a DeNB transmitting a served cell list with a new relay node to a neighbor eNB, according to an aspect of the present disclosure.
FIG. 15 is a flow diagram of example operations, which may be performed by a base station, for advertising a subset of the nodes neighboring the base station, wherein the subset is updated based on certain events, according to an aspect of the present disclosure.
FIG. 16 is a call flow diagram illustrating a neighbor eNB maintaining a list of relay nodes that a DeNB is actually serving based on an empty served cell list, according to an aspect of the present disclosure.

### DESCRIPTION

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), cdma2000, etc. UTRA includes Wideband-CDMA (W-CDMA) and Low Chip Rate (LCR). cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), IEEE 802.11 (WiFi), IEEE 802.16 (WiMAX), IEEE 802.20, Flash-OFDM®, etc. UTRA, E-UTRA, and GSM are part of Universal Mobile Telecommunication System (UMTS). Long Term Evolution (LTE) is an upcoming release of UMTS that uses E-UTRA. UTRA, E-UTRA, GSM, UMTS and LTE are described in documents from an organization named "3rd Generation Partnership Project" (3GPP). cdma2000 is described in documents from an organization named "3rd Generation Partnership Project 2" (3GPP2). These various radio technologies and standards are known in the art. For clarity, certain aspects of the techniques are described below for LTE, and LTE terminology is used in much of the description below.

Single carrier frequency division multiple access (SC-FDMA) is a transmission technique that utilizes single carrier modulation at a transmitter side and frequency domain equalization at a receiver side. SC-FDMA has similar performance and essentially the same overall complexity as those of OFDMA. However, an SC-FDMA signal has lower peak-to-average power ratio (PAPR) because of its inherent single carrier structure. SC-FDMA has drawn great attention, especially in uplink communications where lower PAPR greatly benefits the mobile terminal in terms of transmit power efficiency. It is currently a working assumption for uplink multiple access scheme in 3GPP LTE, LTE-A, and E-UTRA.

### AN EXAMPLE WIRELESS COMMUNICATION SYSTEM

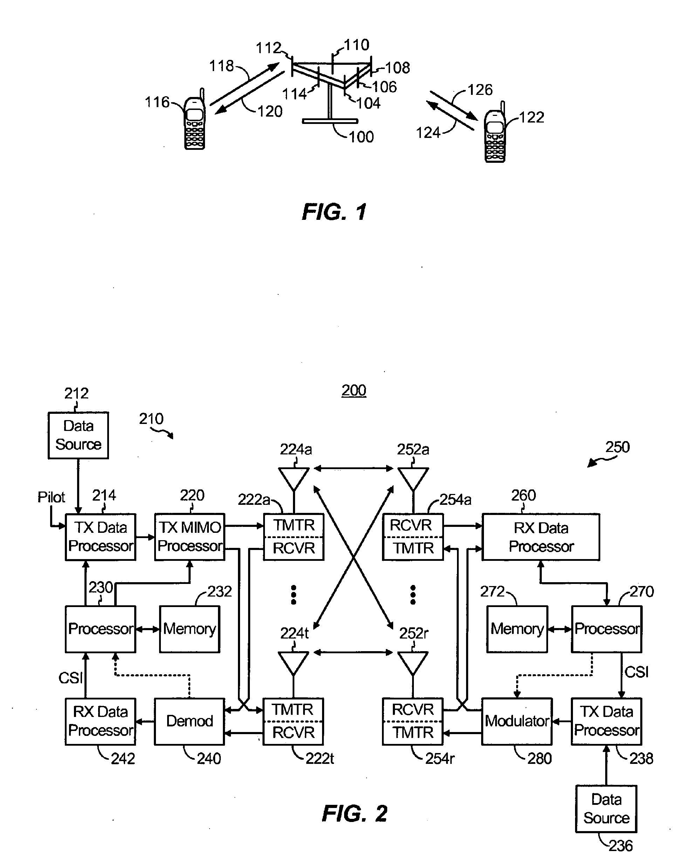

Referring to FIG. 1, a multiple access wireless communication system according to one aspect is illustrated. An access point 100 (AP) includes multiple antenna groups, one including antenna 104 and antenna 106, another including antenna 108 and antenna 110, and yet another including antenna 112 and antenna 114. In FIG. 1, only two antennas are shown for each antenna group; however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal 122 is in communication with antennas 106 and 108, where antennas 106 and 108 transmit information to access terminal 122 over forward link 126 and receive information from access terminal 122 over reverse link 124. In an FDD system, communication links 118, 120, 124, and 126 may use different frequency for communication. For example, forward link 120 may use a different frequency then that used by reverse link 118.

Each group of antennas and/or the area in which they are designed to communicate is often referred to as a sector of the access point. In the aspect, antenna groups each are designed to communicate to access terminals in a sector, of the areas covered by the access point 100.

In communication over forward links 120 and 126, the transmitting antennas of the access point 100 utilize beamforming in order to improve the signal-to-noise ratio (SNR) of forward links for the different access terminals 116 and 122. Also, an access point using beamforming to transmit to access terminals scattered randomly through the access point's coverage area causes less interference to access terminals in neighboring cells than an access point transmitting through a single antenna to all the access point's access terminals.

An access point (AP) may be a fixed station used for communicating with the terminals and may also be referred to as a base station (BS), a Node B, or some other terminology. An access terminal may also be called a mobile station (MS), user equipment (UE), a wireless communication device, terminal, user terminal (UT), or some other terminology.

FIG. 2 is a block diagram of an aspect of a transmitter system 210 (also known as an access point) and a receiver system 250 (also known as an access terminal) in a MIMO system 200. At the transmitter system 210, traffic data for a number of data streams is provided from a data source 212 to a transmit (TX) data processor 214.

In an aspect, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, *M*-PSK, or *M*-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain aspects, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use. Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights and then processes the extracted message.

In an aspect, logical channels are classified into Control Channels and Traffic Channels. Logical Control Channels comprise Broadcast Control Channel (BCCH) which is a DL channel for broadcasting system control information. Paging Control Channel (PCCH) is a DL channel that transfers paging information. Multicast Control Channel (MCCH) is a point-to-multipoint DL channel used for transmitting Multimedia Broadcast and Multicast Service (MBMS) scheduling and control information for one or several MTCHs. Generally, after establishing an RRC connection, this channel is only used by UEs that receive MBMS (Note: old MCCH+MSCH). Dedicated Control Channel (DCCH) is a point-to-point bi-directional channel that transmits dedicated control information used by UEs having an RRC connection. In an aspect, Logical Traffic Channels comprise a Dedicated Traffic Channel (DTCH), which is a point-to-point bi-directional channel, dedicated to one UE, for the transfer of user information. Also, a Multicast Traffic Channel (MTCH) is a point-to-multipoint DL channel for transmitting traffic data.

In an aspect, Transport Channels are classified into DL and UL. DL Transport Channels comprise a Broadcast Channel (BCH), Downlink Shared Data Channel (DL-SDCH), and a Paging Channel (PCH), the PCH for support of UE power saving (DRX cycle is indicated by the network to the UE), broadcasted over entire cell and mapped to PHY resources which can be used for other control/traffic channels. The UL Transport Channels comprise a Random Access Channel (RACH), a Request Channel (REQCH), an Uplink Shared Data Channel (UL-SDCH), and a plurality of PHY channels. The PHY channels comprise a set of DL channels and UL channels.

The DL PHY channels comprise:
Common Pilot Channel (CPICH)
Synchronization Channel (SCH)
Common Control Channel (CCCH)
Shared DL Control Channel (SDCCH)
Multicast Control Channel (MCCH)
Shared UL Assignment Channel (SUACH)
Acknowledgement Channel (ACKCH)
DL Physical Shared Data Channel (DL-PSDCH)
UL Power Control Channel (UPCCH)
Paging Indicator Channel (PICH)
Load Indicator Channel (LICH)

The UL PHY Channels comprise:
Physical Random Access Channel (PRACH)
Channel Quality Indicator Channel (CQICH)
Acknowledgement Channel (ACKCH)
Antenna Subset Indicator Channel (ASICH)
Shared Request Channel (SREQCH)
UL Physical Shared Data Channel (UL-PSDCH)
Broadband Pilot Channel (BPICH)

In an aspect, a channel structure is provided that preserves low PAR (at any given time, the channel is contiguous or uniformly spaced in frequency) properties of a single carrier waveform.

For the purposes of the present document, the following abbreviations apply:
- AM: Acknowledged Mode
- AMD: Acknowledged Mode Data
- ARQ: Automatic Repeat Request
- BCCH: Broadcast Control CHannel
- BCH: Broadcast CHannel
- C-: Control-
- CCCH: Common Control CHannel
- CCH: Control CHannel
- CCTrCH: Coded Composite Transport Channel
- CP: Cyclic Prefix
- CRC: Cyclic Redundancy Check
- CTCH: Common Traffic CHannel
- DCCH: Dedicated Control CHannel
- DCH: Dedicated CHannel
- DL: DownLink
- DSCH: Downlink Shared CHannel
- DTCH: Dedicated Traffic CHannel
- FACH: Forward link Access CHannel
- FDD: Frequency Division Duplex
- L1: Layer 1 (physical layer)
- L2: Layer 2 (data link layer)
- L3: Layer 3 (network layer)
- LI: Length Indicator
- LSB: Least Significant Bit
- MAC: Medium Access Control
- MBMS: Multimedia Broadcast Multicast Service
- MCCH: MBMS point-to-multipoint Control CHannel
- MRW: Move Receiving Window
- MSB: Most Significant Bit
- MSCH: MBMS point-to-multipoint Scheduling CHannel
- MTCH: MBMS point-to-multipoint Traffic CHannel
- PCCH: Paging Control CHannel
- PCH: Paging CHannel
- PDU: Protocol Data Unit
- PHY: PHYsical layer
- PhyCH: Physical CHannels
- RACH: Random Access CHannel
- RB: Resource Block
- RLC: Radio Link Control
- RRC: Radio Resource Control
- SAP: Service Access Point
- SDU: Service Data Unit
- SHCCH: SHared channel Control CHannel
- SN: Sequence Number
- SUFI: SUper FIeld
- TCH: Traffic CHannel
- TDD: Time Division Duplex
- TFI: Transport Format Indicator
- TM: Transparent Mode
- TMD: Transparent Mode Data
- TTI: Transmission Time Interval
- U-: User-
- UE: User Equipment
- UL: UpLink
- UM: Unacknowledged Mode
- UMD: Unacknowledged Mode Data
- UMTS: Universal Mobile Telecommunications System
- UTRA: UMTS Terrestrial Radio Access
- UTRAN: UMTS Terrestrial Radio Access Network
- MBSFN: multicast broadcast single frequency network
- MCE: MBMS coordinating entity
- MCH: multicast channel
- DL-SCH: downlink shared channel
- MSCH: MBMS control channel
- PDCCH: physical downlink control channel
- PDSCH: physical downlink shared channel

### AN EXAMPLE RELAY SYSTEM

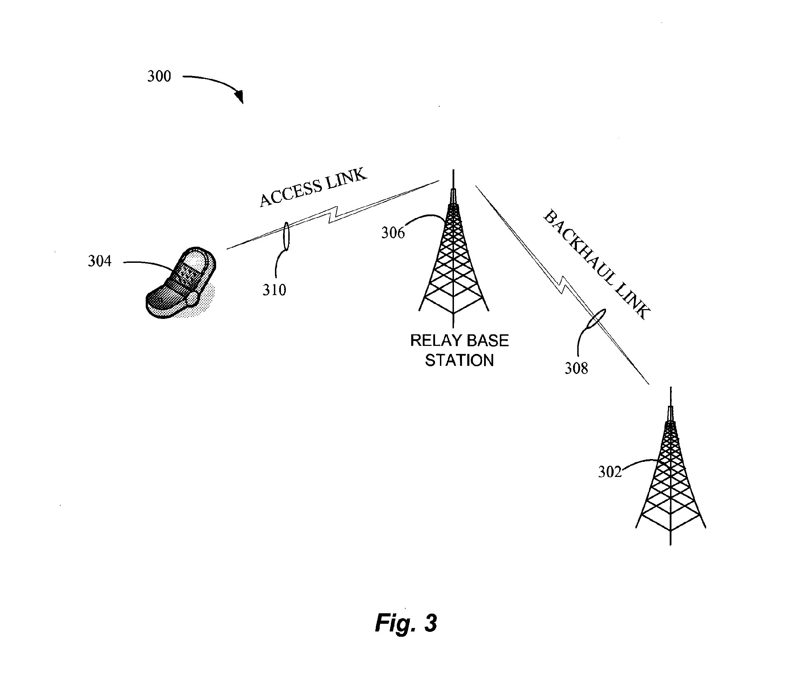

FIG. 3 illustrates an example wireless system 300 in which certain aspects of the present disclosure may be practiced. As illustrated, the system 300 includes a donor base station (BS) 302 (also known as donor access point or a donor evolved Node B (DeNB)) that communicates with a user equipment (UE) 304 via a relay BS 306 (also known as a relay access point, a relay node, or a relay).

The relay BS 306 may communicate with the donor BS 302 via a backhaul link 308 and with the UE 304 via an access link 310. In other words, the relay BS 306 may receive downlink messages from the donor BS 302 over the backhaul link 308 and relay these messages to the UE 304 over the access link 310. Similarly, the relay BS 306 may receive uplink messages from the UE 304 over the access link 310 and relay these messages to the donor BS 302 over the backhaul link 308.

In this manner, the relay BS 306 may, thus, be used to supplement a coverage area and help fill "coverage holes." According to certain aspects, a relay BS 306 may appear to a UE 304 as a conventional BS. According to other aspects, certain types of UEs may recognize a relay BS as such, which may enable certain features.

### AN EXAMPLE COMMUNICATION SYSTEM WITH HOME NODE Bs

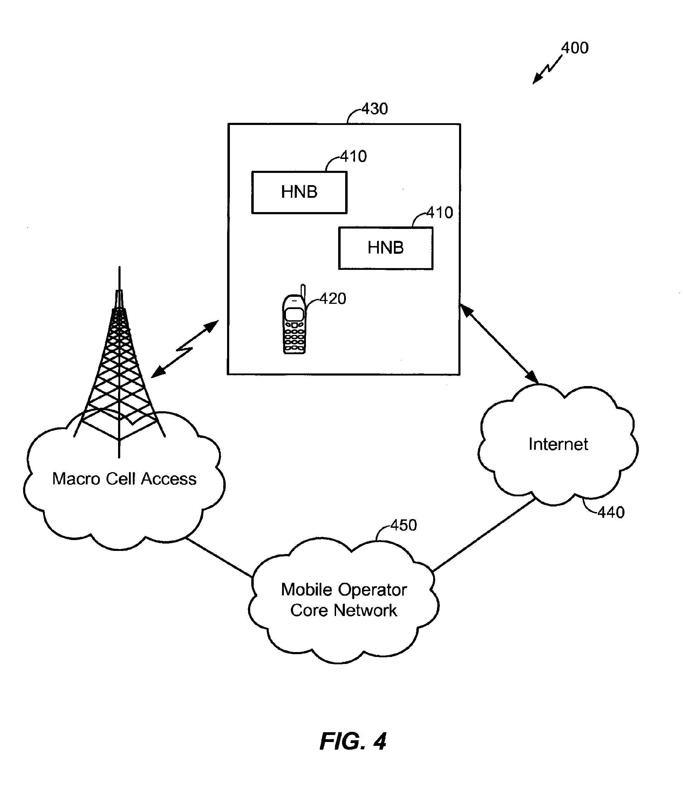

FIG. 4 illustrates an exemplary communication system 400 to enable deployment of access point base stations within a network environment. As shown in FIG. 4, the system 400 includes multiple access point base stations, Home Node B units (HNBs), or femto access points, such as, for example, HNBs 410, each being installed in a corresponding small scale network environment (e.g., in one or more user residences 430) and being configured to serve an associated MS 420. Each HNB 410 is further coupled to the Internet 440 and a mobile operator core network 450 via a DSL router (not shown) or, alternatively, a cable modem (also not shown).

Although aspects described herein use 3GPP2 terminology, it is to be understood that the aspects may be applied to 3GPP (Rel99, Re15, Re16, Rel7) technology, as well as 3GPP2 (1xRTT, 1xEV-DO Re10, RevA, RevB) technology and other known and related technologies. In such aspects described herein, the owner of the HNB 410 subscribes to mobile service, such as, for example, 3G mobile service, offered through the mobile operator core network 450, and the MS 420 is capable to operate both in macro cellular environment and in residential small scale network environment. Thus, the HNB 410 is backward compatible with any existing MS 420.

Furthermore, in addition to the macro cell mobile network 450, the MS 420 can be served by a predetermined number of HNBs 410, namely the HNBs 410 that reside within the user's residence 430, and cannot be in a soft handover state with the macro network 450. The MS 420 can communicate either with the macro network 450 or the HNBs 410, but not both simultaneously. As long as the MS 420 is authorized to communicate with the HNB 410, within the user's residence it is desired that the MS 420 communicate with the associated HNBs 410.

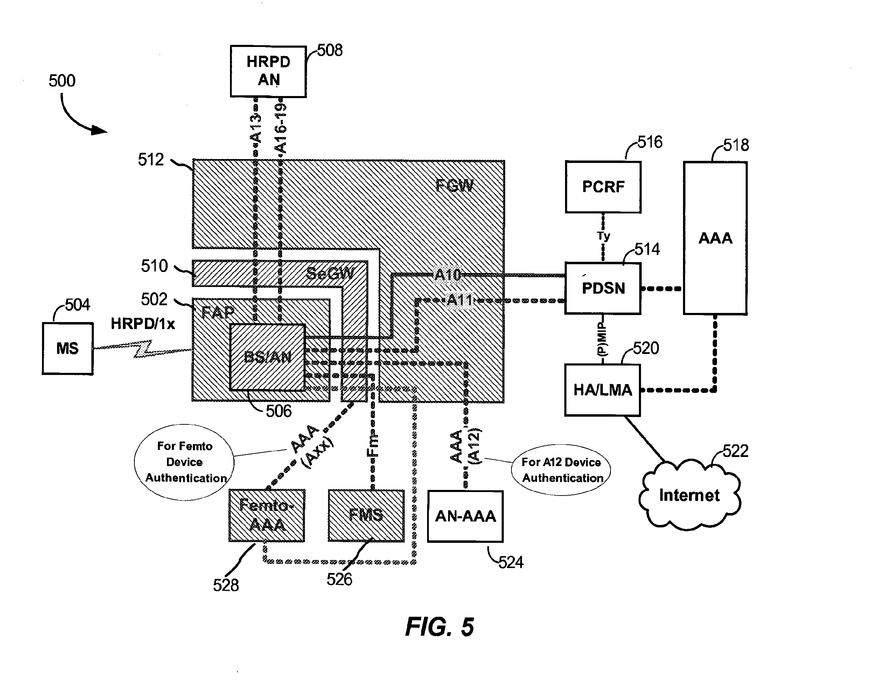

Referring now to FIG. 5, for example, a system 500 enables access control of the HeNB 502 or FAP relative to the mobile station 504 coupled to the FAP via a HRPD 1x wireless communication coupling. Dashed lines connecting block elements indicate control signal couplings, while solid lines indicate data signal couplings. Unshaded blocks indicate macro elements of the wireless communication system 500, while shaded blocks indicate femtocell elements. The system 500 may comprise packet-switched or circuit-switched network elements.

The system 500 comprising the HeNB 502 or FAP further comprises a base station/access network (BS/AN) 506 in direct communication with an HRPD agent node 508 via a security gateway 510 and a femtocell gateway (GW) or a home evolved Node B gateway (HeNB GW) 512. The FAP BS/AN 506 is coupled to a Packet Data Serving Node (PDSN) 514 of the macro network for data signaling and control, again via the security gateway 510 and the HeNB GW 512. The PDSN is coupled to a Policy and Charging Rules Function 516 and to a macro AAA server 518 via control signaling, and to a Home Anchor/Local Mobility Anchor (HA/LMA) 520 via data signaling. The HA/LMA is coupled, in turn, to the wide area network (Internet) 522 via data signaling. The FAP BS/AN 506 is further coupled to an access network (AN) AAA server 524 via the secure gateway 510 and the HeNB GW 512 for A12 device authentication. The FAP BS/AN 506 is further coupled to a Femto Management System (FMS) server 526 via the secure gateway 510 for femtocell management signaling and to a femtocell AAA server 528 for AAA control signaling.

The HeNB (FAP) 502 may perform functions of a relay node. That is, the HeNB 502 may relay communication and data signals from user equipment to a base station, for example to the HeNB GW 512. The HeNB GW 512 may perform functions of a donor base station (DeNB) relative to an HeNB 502. That is, the HeNB GW 512 may operate as a base station of the wireless communication system, with added functionality for handling data and interactions with components operating as relays for user equipment. Some of these additional functions are disclosed or implied by the present disclosure.

### AN EXAMPLE E-UTRAN ARCHITECTURE

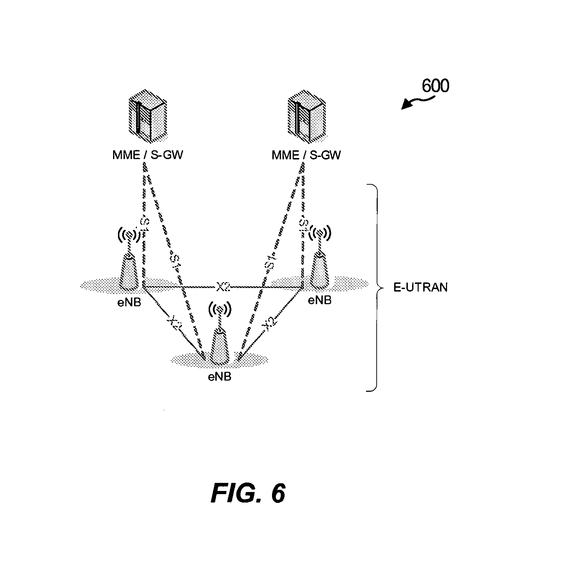

FIG. 6 illustrates an exemplary E-UTRAN architecture. The E-UTRAN consists of eNBs, providing the E-UTRA user plane (PDCP/RLC/MAC/PHY) and control plane (RRC) protocol terminations towards the UE. The eNBs are interconnected with each other by means of the X2 interface. The eNBs are also connected by means of the S1 interface to the EPC (Evolved Packet Core), more specifically to the MME (Mobility Management Entity) by means of the S1-MME and to the Serving Gateway (S-GW) by means of the S1-U. The S1 interface supports a many-to-many relation between MMEs / Serving Gateways and eNBs.

In an aspect, a relay node (RN) of a wireless communication system is configured to relay messages from user equipment to a base station. The relay node mimics operation of a base station to the user equipment. The relay node mimics operation of user equipment to a base station, modified in that the relay node maps one or more Uu radio bearers from one or more user equipment devices to a single Un radio bearer for transmission of data to a base station. Exact duplication of UE or BS functions by an RN may not always provide optimum efficiency. Certain operations involving relay nodes and other nodes in communication with relay nodes may enhance system efficiency, as disclosed herein.

The relay node may need to exchange certain non-data information with other node of the wireless communication system. For example, the relay node may need to exchange S1 Access Protocol (AP) messages with a serving gateway or Mobile Management Entity (MME). For further example, the relay node may need to exchange X2 AP messages with one or more base stations.

For example, manually provisioning and managing neighbor cells may be impracticable for LTE networks. Accordingly, as provided in 3GPP specifications, the Automatic Neighbor Relation (ANR) functionality is provided to relieve the operator from the need to manually manage Neighbor Relations (NRs). The ANR function may reside in the eNB, and touches other component. One function of ANR may be to manage the conceptual Neighbor Relation Table (NRT). In addition, a Neighbor Detection Function may operate to identify new neighbors and add them to the NRT. Other functions may include a Neighbor Removal Function for removing outdated NRs. An existing NR from a source cell to a target cell means that eNB controlling the source cell knows the ECGI/CGI and Physical Cell Identifier (PCI) of the target cell, and has an entry in the NRT for the source cell identifying the target cell. An eNB may maintain an NRT for each of its cells. For each NR, the NRT contains the Target Cell Identifier (TCI), which identifies the target cell. For E-UTRAN, the TCI may correspond to the E-UTRAN Cell Global Identifier (ECGI) and Physical Cell Identifier (PCI) of the target cell.

### EXAMPLE ANR FUNCTIONS FOR RELAY NODES, HOME BASE STATIONS. AND RELATED ENTITIES

Automatic Neighbor Relation (ANR) is a valuable tool to simplify network planning and deployment. Certain aspects of the present disclosure involve the ANR function at relay nodes and the implementation details at the DeNB. Due to the X2 proxy function in the DeNB, a relay node (RN) may appear to other eNBs as a cell of the DeNB, with a unique Cell ID. The Cell ID may comprise 28 bits, where 20 bits are used to express the eNB ID and the remaining 8 bits are used to indicate a cell of the eNB. This Cell ID may be selected in two ways: (1) the eNB ID embedded in Cell ID may be the same as the DeNB ID and (2) the eNB ID embedded in Cell ID may be different from the DeNB ID. The first option may work for ANR, but the second option is problematic. The implementation details and any problems involved for a few ANR scenarios are described below.

### Scenario 1: Neighbor eNB Discovers RN via UE ANR

Consider an eNB (denoted "eNB1") that discovers a relay node (RN) via UE-based ANR. Denote the Cell ID of the cell discovered by the UE as CGI_RN (i.e., the cell global identifier (CGI) of the relay node). If X2 already exists between the DeNB and eNB1, then eNB1 may use the eNB ID embedded in CGI_RN to determine that eNB1 already has an X2 relation with the eNB that owns this cell (i.e., the DeNB). Hence, no further action is needed. However, if X2 does not exist between the DeNB and eNB1, then several steps may be taken to establish the X2 interface and update the RN about eNB1.

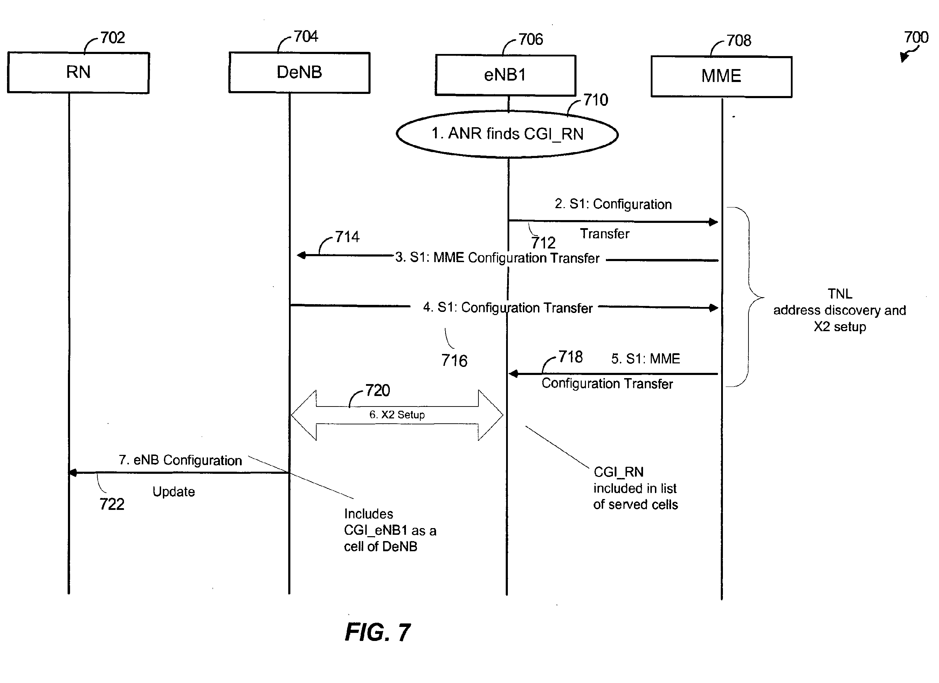

FIG. 7 is a call flow diagram 700 illustrating implementation details in the case of a neighbor eNB discovering a relay via UE ANR. FIG. 7 illustrates a relay node (RN) 702 served by a donor eNB (DeNB) 704, which may be connected with a core network component-such as the Mobile Management Entity (MME) 708-via an S1 interface, for example, as described above in relation to FIG. 6. eNB1 706 may be a neighbor of the DeNB 704 and/or the RN 702. At 710, eNB1 may become aware of CGI_RN through ANR via a UE served by eNB 1. At this time, there is no X2 interface between eNB1 and the DeNB 704, and eNB1 does not know the IP address corresponding to CGI_RN (e.g., the IP address of the DeNB) to set up an X2 interface.

Therefore, transport network layer (TNL) address discovery may be performed. Some of this discovery may be performed according to Section 22.3.6 in the 3GPP TS 36.300 - v 9.4.0 (2010-03) standard. At 712, eNB1 may send an S1 Configuration Transfer message (an IP address query) to the MME 708 via the S1 interface. The S1 Configuration Transfer message may include CGI_RN. In response, the MME 708 may determine the eNB ID of the DeNB 704 based on CGI_RN (in the case where the eNB ID embedded in CGI_RN is the same as the DeNB_ID) and send an S1 MME Configuration Transfer message to the DeNB 704 at 714. At 716, the DeNB 704 may respond to the MME 708 with an S 1 Configuration Transfer message, which may indicate the IP address of the DeNB 704. Upon receiving the IP address of the DeNB 704, the MME 708 may send an S 1 MME Configuration Transfer Message to eNB1 at 718, indicating the DeNB's IP address. With this information, the DeNB 704 and eNB 1 may set up an X2 interface to establish a link connecting the two eNBs at 720.

eNB1 may include CGI_RN in eNB1's list of served cells as shown in FIG. 7. At 722, the DeNB 704 may update the RN 702 about the existence of eNB 1 by transmitting an eNB Configuration Update message. The eNB Configuration Update message may include CGI_eNB1 as a cell of the DeNB 704.

### Scenario 2: RN Discovers Neighbor eNB via UE ANR

Consider an RN that discovers an eNB (denoted "eNB1") via UE-based ANR. Denote the Cell ID of the cell discovered by the UE as CGI_eNB1 (i.e., the CGI of the neighbor eNB). In cases where CGI_eNB1 is already included in the cells advertised by the DeNB, there are no further steps needed. In other cases, however, the DeNB may not advertise CGI_eNB 1 as a served cell to the RN over the X2 interface. This case may occur in two ways: (1) there is no X2 interface between the DeNB and eNB1 or (2) an X2 interface exists, but the DeNB does not advertise CGI_eNB 1 to the RN over X2 for some reason. For both the cases, the solution looks quite similar.

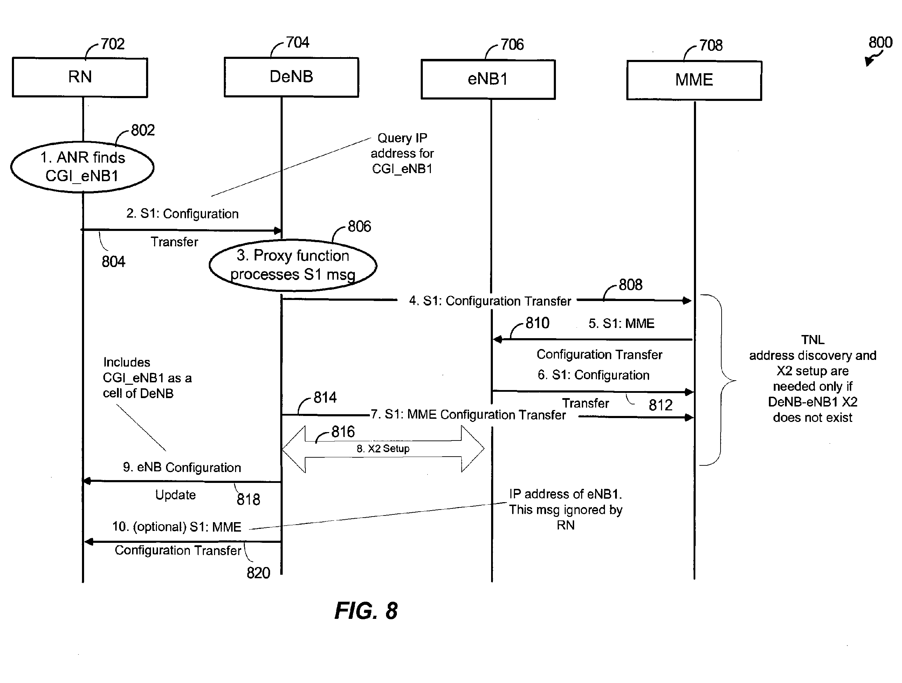

FIG. 8 is a call flow diagram 800 illustrating implementation details in the case of a relay discovering a neighbor eNB via UE ANR. At 802, the RN 702 may become aware of CGI_eNB 1 through ANR via a UE served by the RN. At this time, the DeNB 704 is not advertising CGI_eNB1 to the RN 702. Therefore, the RN 702 may initiate IP address discovery for CGI_eNB by sending an IP address query (e.g., an S 1 Configuration Transfer message) at 804. At 806, the S1 proxy function of the DeNB 704 may process the received message.

If an X2 interface does not already exist between the DeNB 704 and eNB1, the DeNB may terminate the received message and initiate its own IP address discovery procedure with the MME (e.g., using TNL address discovery) in an effort to discover eNB1's IP address. For example, the DeNB 704 may send an S1 Configuration Transfer message to the MME via the S1 interface at 808. The S1 Configuration Transfer message may include CGI_eNB1. In response, the MME 708 may determine the eNB ID of eNB1 based on CGI_eNB and send an S1 MME Configuration Transfer message to eNB1 at 810. At 812, eNB1 may respond to the MME 708 with an S1 Configuration Transfer message indicating the IP address of eNB1. Upon receiving the IP address of eNB1, the MME 708 may send an S1 MME Configuration Transfer Message to the DeNB 704 at 814, indicating eNB1's IP address. With this information, the DeNB 704 and eNB 1 may set up an X2 interface to establish a link connecting the two eNBs at 816.

Once the X2 interface has been set up between the DeNB 704 and eNB1 1 (or if an X2 interface already existed between these eNBs at 806), the DeNB 704 may update the RN 702 about the existence of eNB1 by transmitting an eNB Configuration Update message at 818. The eNB Configuration Update message may include CGI_eNB as a cell served by the DeNB 704.

In short, FIG. 8 illustrates one example scenario of X2 endpoint discovery and the trigger for an X2 setup. In this scenario, the DeNB initiates IP address discovery and X2 setup with a neighbor eNB based on an IP address discovery request received from a relay node. Subsequently, the DeNB advertises the neighbor eNB as a "served cell" to the RN.

For certain aspects, the DeNB 704 may also reply to the trapped S1 Configuration Transfer procedure started at 804 by transmitting an S1 MME Configuration Transfer message with the IP address of eNB1 at 820. However, the DeNB 704 need not send this superfluous message: the RN 702 has no use for this response since the RN cannot set up another X2 interface with the tunnel endpoint (i.e., eNB1) returned thereby.

Regarding the implementation details for receiving eNB Configuration Update messages at the RN 702, the message contents may look somewhat different in terms of the served cell information contained therein. The cells contained in this message typically have CGIs that map the same eNB ID. However, in case of relay nodes, due to the proxy function in the DeNB, there may also be cells of neighbor eNBs with CGIs mapping to different eNB IDs. The RN implementation should make sure that it can deal with this unusual structure of the served cell information. Nevertheless, no specification changes are needed.

With respect to the implementation details for receiving eNB Configuration Update messages at an eNB, legacy eNBs should be taken into consideration. If the CGI of the RNs under the DeNB all correspond to the same eNB ID as the DeNB, then the message received by a neighbor eNB will look like a typical message. However, if the CGI of the RN corresponds to a different eNB ID, then the neighbor eNB implementation may involve handling an unusual eNB Configuration Update message that seems to contain cells from multiple eNBs. It is not clear that all legacy eNBs will be able to deal with this somewhat unusual message.

### Scenario 3: eNB Neighboring HeNB GW Discovers HeNB via UE ANR

In the examples above, the DeNB serves as a gateway to the RN. The same design is applicable to the case of a home eNB (HeNB), where an external box (e.g., an HeNB gateway) serves as a network gateway. For certain aspects, this external box may be only an X2 gateway, or a joint S1 and X2 gateway for other aspects. In either of these cases, the HeNB is similar in function to the RN, and the HeNB GW is similar in function to the DeNB.

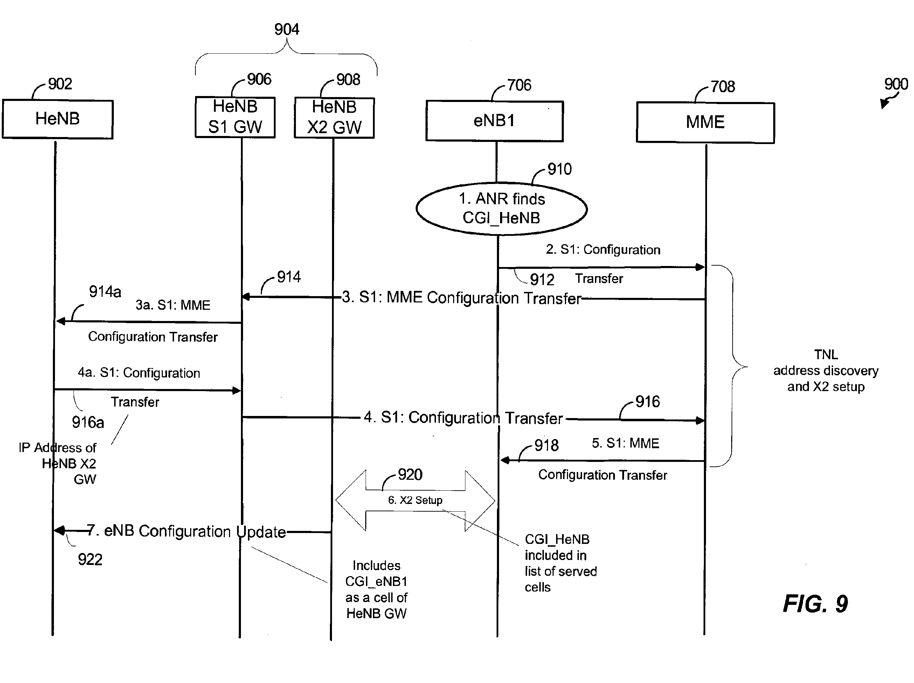

FIG. 9 is a call flow diagram 900 illustrating a neighbor eNB discovering an HeNB via UE ANR. FIG. 9 is similar to the call flow diagram 700 of FIG. 7. Rather than an RN and a DeNB, FIG. 9 illustrates an HeNB 902 served by an HeNB GW 904. The HeNB GW 904 comprises an HeNB S 1 GW 906 and an HeNB X2 GW 908, which may have the same or different IP addresses. Steps 710 to 722 in FIG. 7 are analogous to steps 910 to 922 in FIG. 9.

For example, the MME 708 may determine the eNB ID of the HeNB GW 904 based on an identifier of the HeNB received in an S1 Configuration Transfer message sent at 912. At 914, the MME may send an S 1 MME Configuration Transfer message to the HeNB S1 GW 906 at 914. At 914a, the HeNB S1 GW may forward the IP address discovery request received from the MME 708 to the HeNB 902. The HeNB 902 may determine the IP address of the HeNB X2 GW 908 for the HeNB GW 904 serving the HeNB and send an S 1 Configuration Transfer message with an indication of this IP address in response at 916a. At 916, the HeNB S1 GW 906 may forward the message with the HeNB X2 GW's IP address to the MME 708 with an S1 Configuration Transfer message. Upon receiving the IP address of the HeNB X2 GW 908, the MME 708 may send an S1 MME Configuration Transfer Message to eNB1 at 918, indicating the HeNB X2 GW's IP address. With this information, the HeNB X2 GW 908 and eNB1 may set up an X2 interface to establish a link therebetween at 920.

eNB1 may include the CGI of the HeNB 902 in eNB1's list of served cells as shown in FIG. 9. At 922, the HeNB X2 GW 908 may update the HeNB 902 about the existence of eNB1 by transmitting an eNB Configuration Update message. The eNB Configuration Update message may include CGI_eNB1 as a cell of the HeNB GW 904.

In short, FIG. 9 illustrates another example scenario of X2 endpoint discovery and the trigger for an X2 setup. In this scenario, the HeNB S 1 GW forwards an IP address discovery request received from the MME to the HeNB. The HeNB responds to the IP address discovery request with the IP address of its own HeNB X2 gateway (which may be different from the IP address of the HeNB S1 GW).

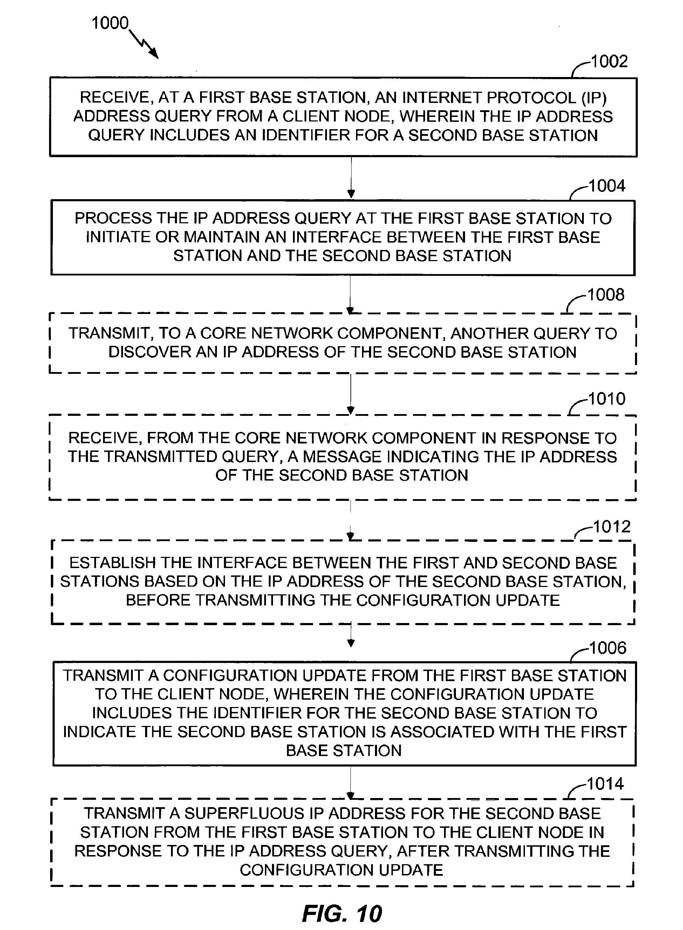

FIG. 10 is a flow diagram of example operations 1000, which may be performed by a first base station, for discovering the Internet Protocol (IP) address of a second base station that a client node has become aware of due to UE ANR. The first base station may be a DeNB or an HeNB GW, for example. The second base station may be a neighboring base station, such as a neighboring eNB. The client node may be a relay node or an HeNB, for example.

At 1002, the first base station may receive an IP address query from a client node, wherein the IP address query includes an identifier for a second base station. For certain aspects, the identifier may comprise a cell global identifier (CGI), which may comprise 20 bits or 28 bits, for example. For certain aspects, the IP address query may comprise an S 1 Configuration Transfer message.

At 1004, the first base station may process the IP address query to initiate or maintain an interface between the first base station and the second base station. The interface may be an X2 interface, for example.

At 1006, the first base station may transmit a configuration update to the client node. The configuration update may include the identifier for the second base station to indicate that the second base station is associated with the first base station (e.g., that an X2 interface has been established between the first and second base stations). For certain aspects, the configuration update may comprise an eNB Configuration Update, which may include served cell information.

For certain aspects, if an interface has not been established between the first and second base stations, the first base station may transmit, to a core network component at 1008, another query to discover an IP address of the second base station. This query may comprise an S 1 Configuration Transfer message. The core network component may be a mobile management entity (MME) as described above. At 1010, the first base station may receive, in response to the transmitted query, a message from the core network component indicating the IP address of the second base station. This message may comprise an S1 MME Configuration Transfer message. At 1012, the first base station may establish the interface between the first and second base stations based on the IP address of the second base station. Establishing the interface may be performed before transmitting the configuration update at 1006.

For certain aspects, the first base station may optionally transmit a superfluous IP address for the second base station to the client node at 1014 in response to the IP address query. Transmitting the superfluous IP address may comprise transmitting an S 1 MME Configuration Transfer message and may be performed after transmitting the configuration update at 1006.

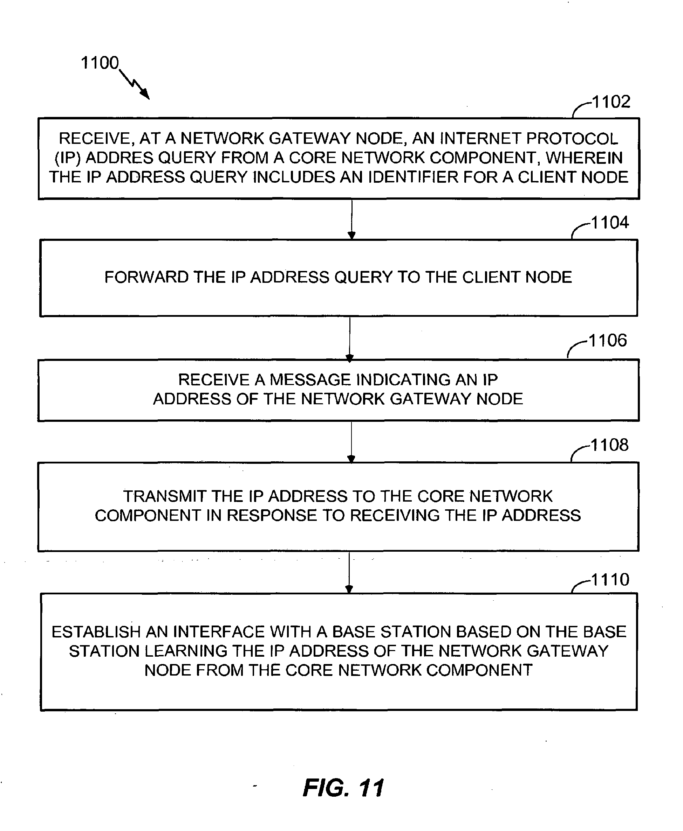

FIG. 11 is a flow diagram of example operations 1100, which may be performed by a network gateway node, for determining the IP address of the network gateway node so that this node may establish an interface with a base station that has become aware of a client node served by the network gateway node due to UE ANR. The network gateway node may comprise an HeNB GW, for example, and the client node may comprise an HeNB. For certain aspects, the interface may comprise an X2 interface.

At 1102, the network gateway node may receive an IP address query from a core network component. As described above, the core network component may comprise an MME. The IP address query may include an identifier for a client node. For certain aspects, the IP address query may comprise an S1 MME Configuration Transfer message.

The network gateway node may forward the IP address query to the client node at 1104. For certain aspects, this forwarding may comprise processing the received IP address query and transmitting a new IP address query based on the processed query. This forwarded IP address query may comprise an S1 MME Configuration Transfer message.

At 1106, the network gateway node may receive a message indicating an IP address of the network gateway node. This IP address may be an IP address of the X2 gateway for the network gateway node, which may be different from the IP address of the S 1 gateway for the same node. This received message may comprise an S 1 Configuration Transfer message.

For certain aspects, the network gateway node may transmit the IP address to the core network component at 1108 in response to receiving the IP address. This transmission may occur in an S1 Configuration Transfer message. At 1110, the network gateway node may establish an interface (e.g., an X2 interface) with a base station based on the base station learning the IP address of the network gateway node from the core network component. For certain aspects, this base station may comprise an eNB that requested the core network component to initiate the IP address query in the first place.

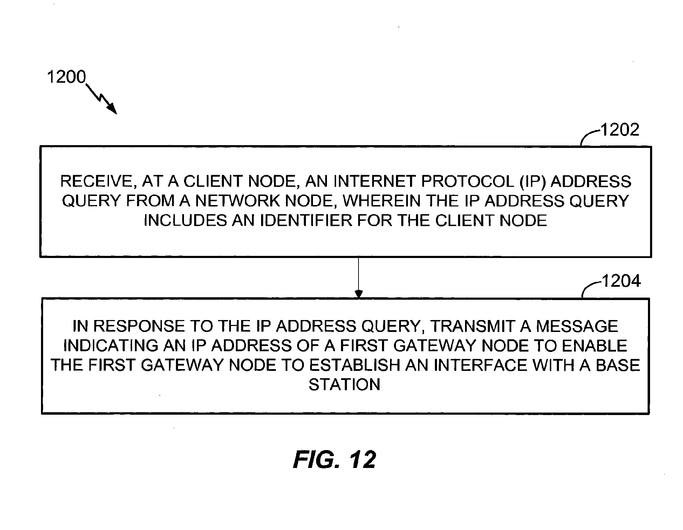

FIG. 12 is a flow diagram of example operations 1200, which may be performed by a client node, for transmitting the IP address of a gateway node so that the gateway node may establish an interface with a base station that has become aware of the client node due to UE ANR. The gateway node may comprise an HeNB GW (or more specifically, an HeNB X2 GW), for example, and the client node may comprise an HeNB. For certain aspects, the interface may comprise an X2 interface. The base station may comprise an eNB that requested the core network component to generate the IP address query in the first place.

At 1202, the client node may receive an IP address query from a network node. The network node may comprise a core network component (e.g., an MME) or another gateway node (e.g., an HeNB S1 GW, which may be part of the same HeNB gateway as the HeNB X2 GW). For certain aspects, the IP address query may be generated by the core network component. The IP address query may include an identifier for the client node. For certain aspects, the IP address query may comprise an S 1 MME Configuration Transfer message.

In response to the IP address query, the client node may transmit a message indicating an IP address of a first gateway node (e.g., an HeNB X2 GW) at 1204 to enable the first gateway node to establish an interface with a base station. For certain aspects, the transmitted message may comprise an S1 Configuration Transfer message. For certain aspects, the network node may comprise a second gateway node (e.g., an HeNB S1 GW), such that the client node may transmit the message indicating the IP address of the first gateway node to the second gateway node. For certain aspects, the first and second gateway nodes may be part of the same network gateway (e.g., the same HeNB GW). The message may indicate the IP address of the HeNB X2 GW, which may be different from the IP address of the HeNB S 1 GW.

### Updating and Advertising a Subset of Neighboring Nodes based on Certain Events

Particularly in the case of an HeNB and HeNB GW, the number of served cells advertised by the gateway may become quite large, though the standard only supports 256 cells per X2 endpoint. Several techniques may be used to reduce the set of served cells advertised by the DeNB towards a particular network node, such as a relay node or a neighbor eNB. The DeNB may advertise a subset of its X2 neighbors as "served cells." This set may initially be empty at X2 setup and subsequently be updated based on certain defined events.

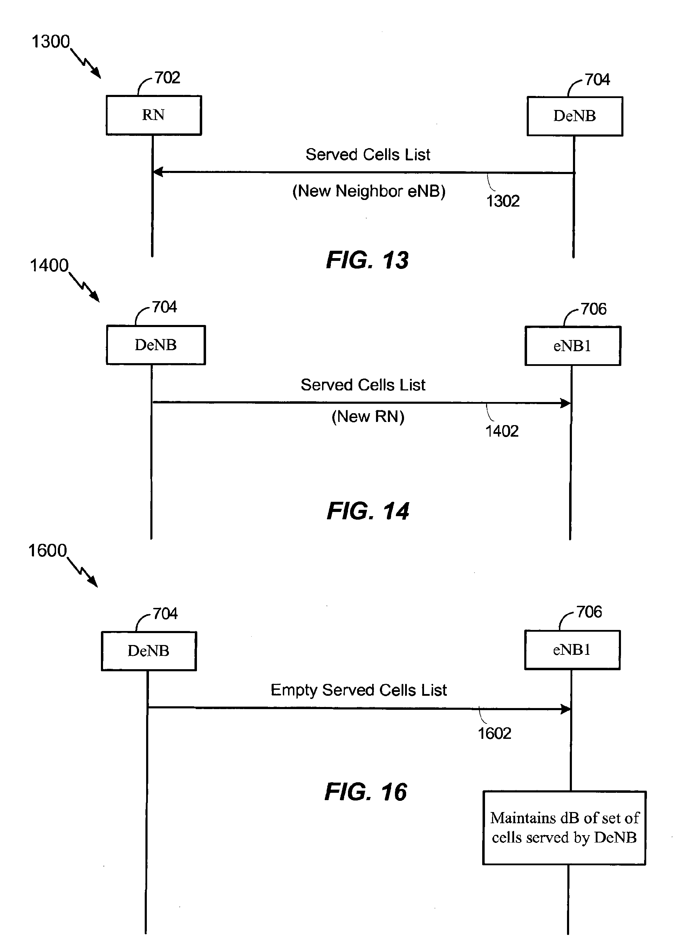

For example, FIG. 13 is a call flow diagram 1300 illustrating a DeNB 704 transmitting a served cells list (e.g., in an eNB Configuration Update message) with a new neighbor eNB to an RN 702 at 1302. The DeNB may add a neighbor eNB to a served cells list sent to the RN based on the following: (a) radio measurements received from the relay node; (b) neighbor discovery processes initiated by the neighbor eNB (e.g., in the S1 MME Configuration Transfer message) as illustrated in FIG. 7 or FIG. 9; (c) neighbor discovery processes initiated by the RN concerning the neighbor eNB (as illustrated in FIG. 8; (d) a configured database within the DeNB where certain nodes need not be advertised for some reason; or (e) a handover-related message from a neighbor eNB targeting a handover to this specific RN (e.g., a handover failure message or a radio link failure message).

As another example, FIG. 14 is a call flow diagram 1400 illustrating a DeNB 704 sending a served cells list with a new relay node (RN) to a neighbor eNB (e.g., eNB1 706) at 1402. The DeNB may add an RN to a served cells list sent to a neighbor eNB (i.e., an eNB neighboring the DeNB) based on the following: (a) neighbor discovery processes initiated by the RN (e.g., in the S1 MME Configuration Transfer message) as illustrated in FIG. 8; (b) neighbor discovery processes initiated by the neighbor eNB (e.g., as illustrated in FIG. 7 or FIG. 9); (c) a configured database within the DeNB; or (d) a handover-related message from an RN targeting a handover to this neighbor eNB (including a handover failure message or a radio link failure report message).

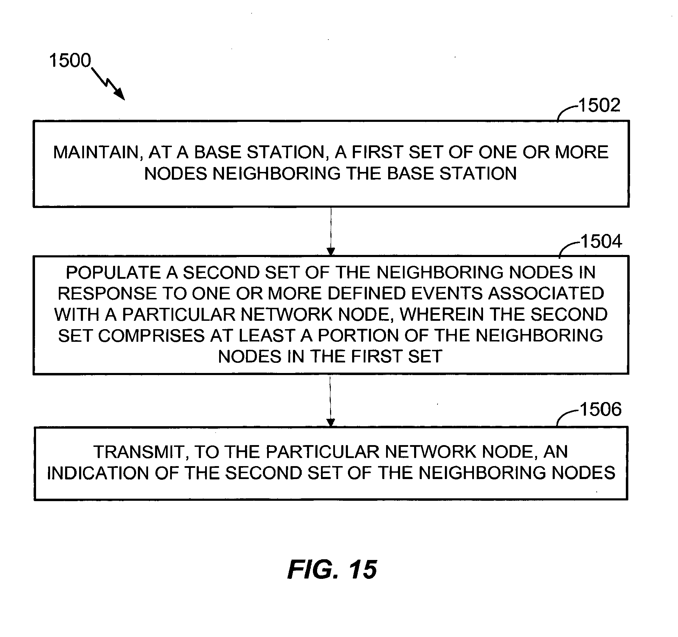

FIG. 15 is a flow diagram of example operations 1500, which may be performed by a base station, for advertising a subset of the nodes neighboring the base station, wherein the subset is updated based on certain events. The base station may comprise a DeNB or an HeNB GW, for example.

At 1502, the base station may maintain a first set of one or more nodes neighboring the base station. For certain aspects, the neighboring nodes may comprise neighboring base stations (e.g., neighboring eNBs) or network gateway nodes (e.g., HeNB GWs), while in other aspects, the neighboring nodes may comprise neighboring relay nodes or HeNBs. The first set of neighboring nodes may be maintained in a memory located at the base station.

The base station may populate a second set of the neighboring nodes at 1504 in response to one or more defined events associated with a particular network node. The second set may comprise at least a portion of the neighboring nodes in the first set. The particular network node may be a relay node, an HeNB, a neighboring eNB, or an HeNB GW, for example.

For certain aspects, the defined events may comprise receipt of a handover-related message from one of the neighboring nodes targeting a handover to the particular network node. In this case, populating the second set may comprise updating the second set with information for the one of the neighboring nodes based on the handover-related message, which may be a handover failure message or a radio link failure message. For other aspects, the defined events may comprise receipt of a radio measurement (e.g., a report) of one of the neighboring nodes from the particular network node. In this case, populating the second set may comprise updating the second set with information for the one of the neighboring nodes based on the radio measurement. For other aspects, the defined events may comprise comparison of the neighboring nodes to a database specifying neighboring node data.

For certain aspects, the defined events may comprise receipt of a neighbor discovery message initiated by one of the neighboring nodes made aware of an identifier for the particular network node (as shown in FIG. 7, for example). For other aspects, the defined events may comprise receipt of a neighbor discovery message initiated by the particular network node after being made aware of an identifier for one of the neighboring nodes. In either event, populating the second set may comprise updating the second set with information for the one of the neighboring nodes based on the neighbor discovery message.

At 1506, the base station may transmit, to the particular network node, an indication of the second set of the neighboring nodes. For example, the indication may comprise served cell information, which may included in a configuration update, such as an eNB Configuration Update.

For certain aspects, an empty served cells list may be maintained and advertised to the neighbor eNB. For example, FIG. 16 is a call flow diagram 1600 illustrating a DeNB 704 sending an empty "served cells" list to a neighbor eNB (e.g., eNB1 706) at 1602. At 1604, the neighbor eNB may maintain an internal database of the set of cells served by the DeNB and may use this database for X2 message routing. A cell may be added to the database based on the following: (a) a radio measurement (including ANR) has been received corresponding to this cell; (b) the neighbor discovery processes being initiated by a relay node or DeNB (e.g., in the S1 MME Configuration Transfer message); (c) a configured database within the neighbor eNB; (d) a handover-related message from an RN or DeNB targeting a handover to a specific RN (including a handover failure message); or (e) the cell having a certain physical cell identifier (PCI) that corresponds to a known category of nodes (e.g., relay nodes or HeNBs).

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in Figures, those operations may have corresponding counterpart means-plus-function components with similar numbering.

More particularly, means for transmitting, mean for sending, or means for forwarding may comprise a transmitter, such as the transmitter 222 or 254 illustrated in FIG. 2. Means for receiving may comprise a receiver, such as the receiver 222 or 254 illustrated in FIG. 2. Means for determining, means for processing, means for maintaining, or means for populating may comprise a processing system having at least one processor, such as the processor 230 or the processor 270 illustrated in FIG. 2. Means for storing may comprise a memory, such as the memory 232 or the memory 272 of FIG. 2.

It is understood that the specific order or hierarchy of steps in the processes disclosed is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

Those of skill in the art would understand that information and signals may be represented using any of a variety of different technologies and techniques. For example, data, instructions, commands, information, signals, bits, symbols and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed aspects is provided to enable any person skilled in the art to make or use the present disclosure. Various modifications to these aspects will be readily apparent to those skilled in the art, and the generic principles defined herein may be applied to other aspects without departing from the
scope of the disclosure. Thus, the present disclosure is not intended to be limited to the aspects shown herein but is to be accorded the widest scope consistent with the principles and novel features disclosed herein.

In the following, further examples are described to facilitate the understanding of the invention:
1. A method for wireless communications, comprising:
   receiving, at a first base station, an Internet protocol (IP) address query from a client node, wherein the IP address query includes an identifier for a second base station;
   processing the IP address query at the first base station to initiate or maintain an interface between the first base station and the second base station; and
   transmitting a configuration update from the first base station to the client node, wherein the configuration update includes the identifier for the second base station to indicate the second base station is associated with the first base station.
2. The method of example 1, wherein the first base station is a donor evolved Node B (DeNB).
3. The method of example 2, wherein the client node is a relay node (RN).
4. The method of example 1, wherein the first base station is a home evolved Node B gateway (HeNB GW).
5. The method of example 4, wherein the client node is a home evolved Node B (HeNB).
6. The method of example 1, wherein the second base station is a neighbor of the first base station.
7. The method of example 1, further comprising transmitting a superfluous IP address for the second base station from the first base station to the client node in response to the IP address query, after transmitting the configuration update.
8. The method of example 1, further comprising:
   transmitting, to a core network component, another query to discover an IP address of the second base station;
   receiving, from the core network component in response to the transmitted query, a message indicating the IP address of the second base station; and
   establishing the interface between the first and second base stations based on the IP address of the second base station, before transmitting the configuration update.
9. The method of example 8, wherein the interface comprises an X2 interface.
10. The method of example 1, wherein the first base station acts as a proxy for the client node.
11. A first apparatus, comprising:
   a receiver configured to receive an Internet protocol (IP) address query from a client node, wherein the IP address query includes an identifier for a second apparatus;
   at least one processor configured to process the IP address query to initiate or maintain an interface between the first apparatus and the second apparatus; and
   a transmitter configured to transmit a configuration update to the client node, wherein the configuration update includes the identifier for the second apparatus to indicate the second apparatus is associated with the first apparatus.
12. The first apparatus of example 11, wherein the first apparatus is a donor evolved Node B (DeNB).
13. The first apparatus of example 12, wherein the client node is a relay node (RN).
14. The first apparatus of example 11, wherein the first apparatus is a home evolved Node B gateway (HeNB GW).
15. The first apparatus of example 14, wherein the client node is a home evolved Node B (HeNB).
16. The first apparatus of example 11, wherein the second apparatus is a neighbor of the first apparatus.
17. The first apparatus of example 11, wherein the transmitter is configured to transmit a superfluous IP address for the second apparatus from the first apparatus to the client node in response to the IP address query, after the transmitter transmits the configuration update.
18. The first apparatus of example 11, wherein the transmitter is configured to transmit, to a core network component, another query to discover an IP address of the second apparatus; wherein the receiver is configured to receive, from the core network component in response to the transmitted query, a message indicating the IP address of the second apparatus; and wherein the at least one processor is configured to establish the interface between the first and second apparatuses based on the IP address of the second apparatus, before the transmitter transmits the configuration update.
19. The first apparatus of example 18, wherein the interface comprises an X2 interface.
20. The first apparatus of example 11, wherein the first apparatus acts as a proxy for the client node.
21. A first apparatus for wireless communications, comprising:
   means for receiving an Internet protocol (IP) address query from a client node, wherein the IP address query includes an identifier for a second apparatus;
   means for processing the IP address query to initiate or maintain an interface between the first apparatus and the second apparatus; and
   means for transmitting a configuration update from the first apparatus to the client node, wherein the configuration update includes the identifier for the second apparatus to indicate the second apparatus is associated with the first apparatus.
22. A computer-program product for wireless communications, comprising:
   a computer-readable medium comprising code for:
      receiving, at a first base station, an Internet protocol (IP) address query from a client node, wherein the IP address query includes an identifier for a second base station;
      processing the IP address query at the first base station to initiate or maintain an interface between the first base station and the second base station; and
      transmitting a configuration update from the first base station to the client node, wherein the configuration update includes the identifier for the second base station to indicate the second base station is associated with the first base station.
23. A method for wireless communications, comprising:
   receiving, at a client node, an Internet protocol (IP) address query from a network node, wherein the IP address query includes an identifier for the client node; and
   in response to the IP address query, transmitting a message indicating an IP address of a first gateway node to enable the first gateway node to establish an interface with a base station.
24. The method of example 23, wherein the network node comprises a second gateway node, such that the receiving comprises receiving the IP address query from the second gateway node, and wherein the transmitting comprises transmitting the message indicating the IP address of the first gateway node to the second gateway node.
25. The method of example 24, wherein the first and second gateway nodes are part of the same network gateway.
26. The method of example 24, wherein the client node comprises a home evolved Node B (HeNB).
27. The method of example 26, wherein the first gateway node comprises an HeNB X2 gateway (GW) and wherein the IP address is the IP address of the HeNB X2 GW.
28. The method of example 27, wherein the second gateway node comprises an HeNB S1 GW and wherein the IP address of the HeNB X2 GW is different from an IP address of the HeNB S1 GW.
29. The method of example 24, wherein the IP address query is generated by a core network component.
30. The method of example 29, wherein the base station requested the core network component to generate the IP address query.
31. The method of example 23, wherein the interface comprises an X2 interface.
32. An apparatus for wireless communications, comprising:
   a receiver configured to receive an Internet protocol (IP) address query from a network node, wherein the IP address query includes an identifier for the apparatus; and
   a transmitter configured to transmit a message indicating an IP address of a first gateway node in response to the IP address query to enable the first gateway node to establish an interface with a base station.
33. The apparatus of example 32, wherein the network node comprises a second gateway node, such that the receiver is configured to receive the IP address query from the second gateway node, and wherein the transmitter is configured to transmit the message indicating the IP address of the first gateway node to the second gateway node.
34. The apparatus of example 33, wherein the first and second gateway nodes are part of the same network gateway.
35. The apparatus of example 33, wherein the apparatus comprises a home evolved Node B (HeNB).
36. The apparatus of example 35, wherein the first gateway node comprises an HeNB X2 gateway (GW) and wherein the IP address is the IP address of the HeNB X2 GW.
37. The apparatus of example 36, wherein the second gateway node comprises an HeNB S1 GW and wherein the IP address of the HeNB X2 GW is different from an IP address of the HeNB S1 GW.
38. The apparatus of example 33, wherein the IP address query is generated by a core network component.
39. The apparatus of example 38, wherein the base station requested the core network component to generate the IP address query.
40. The apparatus of example 32, wherein the interface comprises an X2 interface.
41. An apparatus for wireless communications, comprising:
   means for receiving an Internet protocol (IP) address query from a network node, wherein the IP address query includes an identifier for the apparatus; and
   means for transmitting a message indicating an IP address of a gateway node in response to the IP address query to enable the gateway node to establish an interface with a base station.
42. A computer-program product for wireless communications, comprising:
   a computer-readable medium comprising code for:
      receiving, at a client node, an Internet protocol (IP) address query from a network gateway node, wherein the IP address query includes an identifier for the client node; and
      in response to the IP address query, transmitting a message indicating an IP address of a gateway node to enable the gateway node to establish an interface with a base station.
43. A method for wireless communications, comprising:
   receiving, at a network gateway node, an Internet protocol (IP) address query from a core network component, wherein the IP address query includes an identifier for a client node;
   forwarding the IP address query to the client node; and
   receiving a message indicating an IP address of the network gateway node.
44. The method of example 43, further comprising transmitting the IP address to the core network component in response to receiving the IP address.
45. The method of example 44, further comprising establishing an interface with a base station based on the base station learning the IP address of the network gateway node from the core network component.
46. The method of example 43, wherein the client node is a home evolved Node B (HeNB).
47. The method of example 46, wherein the network gateway node is an HeNB gateway (GW).
48. The method of example 47, wherein the HeNB GW comprises an HeNB X2 GW and wherein the IP address is the IP address of the HeNB X2 GW.
49. The method of example 48, wherein the HeNB GW further comprises an HeNB S1 GW and wherein the IP address of the HeNB X2 GW is different from an IP address of the HeNB S1 GW.
50. The method of example 45, wherein the interface comprises an X2 interface.
51. The method of example 43, wherein the core network component comprises a mobile management entity (MME).
52. An apparatus for wireless communications, comprising:
   a receiver configured to receive an Internet protocol (IP) address query from a core network component, wherein the IP address query includes an identifier for a client node; and
   a transmitter configured to forward the IP address query to the client node, wherein the receiver is configured to receive a message indicating an IP address of the apparatus.
53. The apparatus of example 52, wherein the transmitter is configured to transmit the IP address to the core network component in response to receiving the IP address.
54. The apparatus of example 53, further comprising at least one processor configured to establish an interface with a base station neighboring the apparatus based on the neighboring base station learning the IP address of the apparatus from the core network component.
55. The apparatus of example 52, wherein the client node is a home evolved Node B (HeNB).
56. The apparatus of example 55, wherein the apparatus is an HeNB gateway (GW).
57. The apparatus of example 56, wherein the HeNB GW comprises an HeNB X2 GW and wherein the IP address is the IP address of the HeNB X2 GW.
58. The apparatus of example 57, wherein the HeNB GW further comprises an HeNB S1 GW and wherein the IP address of the HeNB X2 GW is different from an IP address of the HeNB S1 GW.
59. The apparatus of example 54, wherein the interface comprises an X2 interface.
60. The apparatus of example 52, wherein the core network component comprises a mobile management entity (MME).
61. An apparatus for wireless communications, comprising:
   means for receiving an Internet protocol (IP) address query from a core network component, wherein the IP address query includes an identifier for a client node; and
   means for forwarding the IP address query to the client node,
      wherein the means for receiving is configured to receive a message indicating an IP address of the apparatus.
62. A computer-program product for wireless communications, comprising:
   a computer-readable medium comprising code for:
      receiving, at a network gateway node, an Internet protocol (IP) address query from a core network component, wherein the IP address query includes an identifier for a client node;
      forwarding the IP address query to the client node; and
      receiving a message indicating an IP address of the network gateway node.
63. A method for wireless communications, comprising:
   maintaining, at a base station, a first set of one or more nodes neighboring the base station;
   populating a second set of the neighboring nodes in response to one or more defined events associated with a particular network node, wherein the second set comprises at least a portion of the neighboring nodes in the first set; and
   transmitting, to the particular network node, an indication of the second set of the neighboring nodes.
64. The method of example 63, wherein the particular network node comprises a relay node and the one or more neighboring nodes comprise one or more neighboring base stations.
65. The method of example 63, wherein the particular network node comprises a neighboring base station and the one or more neighboring nodes comprise one or more relay nodes.
66. The method of example 63, wherein the one or more defined events comprise receipt of a handover-related message from one of the neighboring nodes targeting a handover to the particular network node and wherein the populating comprises updating the second set with information for the one of the neighboring nodes based on the handover-related message.
67. The method of example 66, wherein the handover-related message comprises a handover failure message or a radio link failure message.
68. The method of example 63, wherein the one or more defined events comprise receipt of a radio measurement of one of the neighboring nodes from the particular network node and wherein the populating comprises updating the second set with information for the one of the neighboring nodes based on the radio measurement.
69. The method of example 63, wherein the one or more defined events comprise receipt of a neighbor discovery message initiated by one of the neighboring nodes made aware of an identifier for the particular network node and wherein the populating comprises updating the second set with information for the one of the neighboring nodes based on the neighbor discovery message.
70. The method of example 63, wherein the one or more defined events comprise receipt of a neighbor discovery message initiated by the particular network node after being made aware of an identifier for one of the neighboring nodes and wherein the populating comprises updating the second set with information for the one of the neighboring nodes based on the neighbor discovery message.
71. The method of example 63, wherein the one or more defined events comprise comparison of the neighboring nodes to a database specifying neighboring node data.
72. The method of example 63, wherein the particular network node comprises a home evolved Node B (HeNB) and wherein the base station comprises an HeNB gateway (GW).
73. An apparatus for wireless communications, comprising:
   at least one processor configured to:
      maintain a first set of one or more nodes neighboring the apparatus;
      populate a second set of the neighboring nodes in response to one or more defined events associated with a particular network node, wherein the second set comprises at least a portion of the neighboring nodes in the first set; and
   a transmitter configured to transmit, to the particular network node, an indication of the second set of the neighboring nodes.
74. The apparatus of example 73, wherein the particular network node comprises a relay node and the one or more neighboring nodes comprise one or more neighboring base stations.
75. The apparatus of example 73, wherein the particular network node comprises a neighboring base station and the one or more neighboring nodes comprise one or more relay nodes.
76. The apparatus of example 73, wherein the one or more defined events comprise receipt of a handover-related message from one of the neighboring nodes targeting a handover to the particular network node and wherein the populating comprises updating the second set with information for the one of the neighboring nodes based on the handover-related message.
77. The apparatus of example 76, wherein the handover-related message comprises a handover failure message or a radio link failure message.
78. The apparatus of example 73, wherein the one or more defined events comprise receipt of a radio measurement of one of the neighboring nodes from the particular network node and wherein the populating comprises updating the second set with information for the one of the neighboring nodes based on the radio measurement.
79. The apparatus of example 73, wherein the one or more defined events comprise receipt of a neighbor discovery message initiated by one of the neighboring nodes made aware of an identifier for the particular network node and wherein the populating comprises updating the second set with information for the one of the neighboring nodes based on the neighbor discovery message.
80. The apparatus of example 73, wherein the one or more defined events comprise receipt of a neighbor discovery message initiated by the particular network node after being made aware of an identifier for one of the neighboring nodes and wherein the populating comprises updating the second set with information for the one of the neighboring nodes based on the neighbor discovery message.
81. The apparatus of example 73, wherein the one or more defined events comprise comparison of the neighboring nodes to a database specifying neighboring node data.
82. The apparatus of example 73, wherein the particular network node comprises a home evolved Node B (HeNB) and wherein the apparatus comprises an HeNB gateway (GW).
83. An apparatus for wireless communications, comprising:
   means for maintaining a first set of one or more nodes neighboring the apparatus;
   means for populating a second set of the neighboring nodes in response to one or more defined events associated with a particular network node, wherein the second set comprises at least a portion of the neighboring nodes in the first set; and
   means for transmitting, to the particular network node, an indication of the second set of the neighboring nodes.
84. A computer-program product for wireless communications, comprising:
   a computer-readable medium comprising code for:
      maintaining, at a base station, a first set of one or more nodes neighboring the base station;
      populating a second set of the neighboring nodes in response to one or more defined events associated with a particular network node, wherein the second set comprises at least a portion of the neighboring nodes in the first set; and
      transmitting, to the particular network node, an indication of the second set of the neighboring nodes.

## Claims

1. A method (1000) for wireless communications, comprising:
receiving (1002), at a first base station (704), an Internet protocol, IP address query from a client node (702), wherein the IP address query includes an identifier for a second base station (706);
processing (1004) the IP address query at the first base station (704) to initiate or maintain an interface between the first base station (704) and the second base station (706); and
transmitting (1006) a configuration update from the first base station (704) to the client node (702), wherein the configuration update includes the identifier for the second base station (706) to indicate the second base station (706) is associated with the first base station (704).

2. The method (1000) of claim 1, wherein the first base station is a donor evolved Node B, DeNB and wherein the client node is a relay node, RN.

3. The method (1000) of claim 1, wherein the first base station is a home evolved Node B gateway, HeNB GW and wherein the client node is a home evolved Node B, HeNB.

4. The method (1000) of claim 1, wherein the second base station is a neighbor of the first base station.

5. The method (1000) of claim 1, further comprising transmitting an IP address for the second base station from the first base station to the client node in response to the IP address query, after transmitting the configuration update.

6. The method (1000) of claim 1, further comprising:
transmitting (1008), to a core network component, another query to discover an IP address of the second base station;
receiving (1010), from the core network component in response to the transmitted query, a message indicating the IP address of the second base station; and
establishing (1012) the interface between the first and second base stations based on the IP address of the second base station, before transmitting the configuration update.

7. The method (1000) of claim 8, wherein the interface comprises an X2 interface.

8. The method (1000) of claim 1, wherein the first base station acts as a proxy for the client node.

9. A first apparatus (704) for wireless communications, comprising:
means for receiving (1002) an Internet protocol, IP address query from a client node (702), wherein the IP address query includes an identifier for a second apparatus (706);
means for processing (1004) the IP address query to initiate or maintain an interface between the first apparatus (704) and the second apparatus (706); and
means for transmitting (1006) a configuration update from the first apparatus to the client node (702), wherein the configuration update includes the identifier for the second apparatus (706) to indicate the second apparatus (706) is associated with the first apparatus (704).

10. The first apparatus (704) of claim 9, wherein the first apparatus is a donor evolved Node B, DeNB and wherein the client node is a relay node, RN.

11. The first apparatus (704) of claim 9, wherein the first apparatus is a home evolved Node B gateway, HeNB GW and wherein the client node is a home evolved Node B, HeNB.

12. The first apparatus (704) of claim 9, further comprising means for transmitting (1014) an IP address for the second apparatus from the first apparatus to the client node in response to the IP address query, after transmitting the configuration update.

13. The first apparatus (704) of claim 9, further comprising:
means for transmitting (1008), to a core network component, another query to discover an IP address of the second apparatus;
means for receiving (1010), from the core network component in response to the transmitted query, a message indicating the IP address of the second apparatus; and
means for establishing (1012) the interface between the first and second base stations based on the IP address of the second apparatus, before transmitting the configuration update.

14. The first apparatus (704) of claim 9, wherein the first apparatus acts as a proxy for the client node.

15. A computer program comprising program instructions which are computer-executable to implement the method of one of claims 1 to 8.

## Patentansprüche

1. Verfahren (1000) zur drahtlosen Übertragung, umfassend:
Empfangen (1002), bei einer ersten Basisstation (704), einer Internetprotokoll, IP-Adressenabfrage von einem Client-Knoten (702), wobei die IP-Adressenabfrage einen Identifikator einer zweiten Basisstation (706) beinhaltet;
Verarbeiten (1004) der IP-Adressenabfrage bei der ersten Basisstation (704), um eine Schnittstelle zwischen der ersten Basisstation (704) und der zweiten Basisstation (706) zu initiieren oder aufrechtzuerhalten; und
Übertragen (1006) einer Konfigurations-Aktualisierung von der ersten Basisstation (704) zu dem Client-Knoten (702), wobei die Konfigurations-Aktualisierung den Identifikator der zweiten Basisstation (706) beinhaltet, um anzuzeigen, dass die zweite Basisstation (706) mit der ersten Basisstation (704) assoziiert ist.

2. Verfahren (1000) gemäß Anspruch 1, wobei die erste Basisstation ein Donor-Evolved NodeB, DeNB ist, und der Client-Knoten ein Relay-Knoten, RN ist.

3. Verfahren (1000) gemäß Anspruch 1, wobei die erste Basisstation ein Home-Evolved NodeB Gateway, HeNB GW ist, und wobei der Client-Knoten ein Home-Evolved NodeB, HeNB ist.

4. Verfahren (1000) gemäß Anspruch 1, wobei die zweite Basisstation ein Nachbar der ersten Basisstation ist.

5. Verfahren (1000) gemäß Anspruch 1, weiterhin umfassend Übertragen einer IP-Adresse der zweiten Basisstation von der ersten Basisstation zu dem Client-Knoten in Antwort auf die IP-Adressenabfrage, nach dem Übertragen der Konfigurations-Aktualisierung.

6. Verfahren (1000) gemäß Anspruch 1, weiterhin umfassend:
Übertragen (1008) einer weiteren Abfrage zum Auffinden einer IP-Adresse der zweiten Basisstation an eine Core-Netzwerkkomponente;
Empfangen (1010), von der Core-Netzwerkkomponente in Antwort auf die übertragene Abfrage, einer Nachricht, die die IP-Adresse der zweiten Basisstation anzeigt; und
Etablieren (1012) der Schnittstelle zwischen der ersten und zweiten Basisstation basierend auf der IP-Adresse der zweiten Basisstation, vor dem Übertragen der Konfigurations-Aktualisierung.

7. Verfahren (1000) gemäß Anspruch 8, wobei die Schnittstelle eine X2-Schnittstelle umfasst.

8. Verfahren (1000) gemäß Anspruch 1, wobei die erste Basisstation als ein Proxy für den Client-Knoten agiert.

9. Erste Vorrichtung (704) zur drahtlosen Übertragung, umfassend:
Mittel zum Empfangen (1002) einer Internetprotokoll, IP-Adressenabfrage von einem Client-Knoten (702), wobei die IP-Adressenabfrage einen Identifikator einer zweiten Vorrichtung (706) beinhaltet;
Mittel zum Verarbeiten (1004) der IP-Adressenabfrage, um eine Schnittstelle zwischen der ersten Vorrichtung (704) und der zweiten Vorrichtung (706) zu initiieren oder aufrechtzuerhalten; und
Mittel zum Übertragen (1006) einer Konfigurations-Aktualisierung von der ersten Vorrichtung zu dem Client-Knoten (702), wobei die Konfigurations-Aktualisierung den Identifikator der zweiten Vorrichtung (706) beinhaltet, um anzuzeigen, dass die zweite Vorrichtung (706) mit der ersten Vorrichtung (704) assoziiert ist.

10. Erste Vorrichtung (704) gemäß Anspruch 9, wobei die erste Vorrichtung ein Donor-Evolved NodeB, DeNB ist, und der Client-Knoten ein Relay-Knoten, RN ist.

11. Erste Vorrichtung (704) gemäß Anspruch 9, wobei die erste Vorrichtung ein Home-Evolved NodeB Gateway, HeNB GW ist, und wobei der Client-Knoten ein Home-Evolved NodeB, HeNB ist.

12. Erste Vorrichtung (704) gemäß Anspruch 9, weiterhin umfassend Mittel zum Übertragen (1014) einer IP-Adresse der zweiten Vorrichtung von der ersten Vorrichtung zu dem Client-Knoten in Antwort auf die IP-Adressenabfrage, nach dem Übertragen der Konfigurations-Aktualisierung.

13. Erste Vorrichtung (704) gemäß Anspruch 9, weiterhin umfassend:
Mittel zum Übertragen (1008) einer weiteren Abfrage zum Auffinden einer IP-Adresse der zweiten Vorrichtung an eine Core-Netzwerkkomponente;
Mittel zum Empfangen (1010), von der Core-Netzwerkkomponente in Antwort auf die übertragene Abfrage, einer Nachricht, die die IP Adresse der zweiten Vorrichtung anzeigt; und
Mittel zum Etablieren (1012) der Schnittstelle zwischen der ersten und zweiten Basisstation basierend auf der IP-Adresse der zweiten Vorrichtung, vor dem Übertragen der Konfigurations-Aktualisierung.

14. Erste Vorrichtung (704) gemäß Anspruch 9, wobei die erste Vorrichtung als ein Proxy für den Client-Knoten agiert.

15. Computerprogramm umfassend Programmanweisungen, die durch einen Computer ausführbar sind, um das Verfahren gemäß einem der Ansprüche 1-8 zu implementieren.

## Revendications

1. Un procédé (1000) de communication sans fil, comprenant :
la réception (1002), par une première station de base (704), d'une requête d'adresse de protocole Internet, IP, en provenance d'un noeud client (702), la requête d'adresse IP incluant un identifiant pour une seconde station de base (706) ;
le traitement (1004) de la requête d'adresse IP par la première station de base (704) afin d'établir ou de conserver une interface entre la première station de base (704) et la seconde station de base (706) ; et
l'émission (1006) d'une mise à jour de configuration depuis la première station de base (704) vers le noeud client (702), la mise à jour de configuration comprenant l'identifiant pour la seconde station de base (706) afin d'indiquer que la seconde station de base (706) est associée à la première station de base (704).

2. Le procédé (1000) de la revendication 1, dans lequel la première station de base est un Node B évolué donneur, DeNB, et dans lequel le noeud client est un noeud relai, RN.

3. Le procédé (1000) de la revendication 1, dans lequel la première station de base est une passerelle de Node B évolué, HeNB GW, d'accueil et dans lequel le noeud client est un Node B évolué, HeNB d'accueil.

4. Le procédé (1000) de la revendication 1, dans lequel la seconde station de base est un voisin de la première station de base.

5. Le procédé (1000) de la revendication 1, comprenant en outre l'émission d'une adresse IP pour la seconde station de base depuis la première station de base vers le noeud client en réponse à la requête d'adresse IP, après l'émission de la mise à jour de configuration.

6. Le procédé (1000) de la revendication 1, comprenant en outre :
l'émission (1008), vers un composant de coeur de réseau, d'une autre requête de découverte d'une adresse IP de la seconde station de base ;
la réception (1010), en provenance du composant de coeur de réseau en réponse à la requête émise, d'un message indiquant l'adresse IP de la seconde station de base ; et
l'établissement (1012) de l'interface entre la première et la seconde station de base en fonction de l'adresse IP de la seconde station de base, avant l'émission de la mise à jour de configuration.

7. Le procédé (1000) de la revendication 6, dans lequel l'interface comprend une interface X2.

8. Le procédé (1000) de la revendication 1, dans lequel la première station de base joue le rôle d'un serveur mandataire pour le noeud client.

9. Un premier dispositif (704) de communication sans fil, comprenant :
des moyens de réception (1002) d'une requête d'adresse de protocole Internet, IP, en provenance d'un noeud client (702), la requête d'adresse IP incluant un identifiant pour un second dispositif (706) ;
des moyens de traitement (1004) de la requête d'adresse IP afin d'établir ou de conserver une interface entre le premier dispositif (704) et le second dispositif (706) ;
et
des moyens d'émission (1006) d'une mise à jour de configuration depuis le premier dispositif (704) vers le noeud client (702), la mise à jour de configuration comprenant l'identifiant pour le second dispositif (706) afin d'indiquer que le second dispositif (706) est associé au premier dispositif (704).

10. Le premier dispositif (704) de la revendication 9, dans lequel le premier dispositif est un Node B évolué donneur, DeNB, et dans lequel le noeud client est un noeud relai, RN.

11. Le premier dispositif (704) de la revendication 9, dans lequel le premier dispositif est une passerelle de Node B évolué, HeNB GW, d'accueil et dans lequel le noeud client est un Node B évolué, HeNB d'accueil.

12. Le premier dispositif (704) de la revendication 9, comprenant en outre des moyens d'émission (1014) d'une adresse IP pour le second dispositif depuis le premier dispositif vers le noeud client en réponse à la requête d'adresse IP, après l'émission de la mise à jour de configuration.

13. Le premier dispositif (704) de la revendication 9, comprenant en outre :
des moyens d'émission (1008), vers un composant de coeur de réseau, d'une autre requête de découverte d'une adresse IP de la seconde station de base ;
des moyens de réception (1010), en provenance du composant de coeur de réseau en réponse à la requête émise, d'un message indiquant l'adresse IP de la seconde station de base ; et
des moyens d'établissement (1012) de l'interface entre la première et la seconde station de base en fonction de l'adresse IP de la seconde station de base, avant l'émission de la mise à jour de configuration.

14. Le premier dispositif (704) de la revendication 9, dans lequel le premier dispositif joue le rôle d'un serveur mandataire pour le noeud client.

15. Un programme informatique comprenant des instructions de programme qui sont exécutables par calculateur pour mettre en oeuvre le procédé de l'une des revendications 1 à 8.
